# EUROPÄISCHE PATENTSCHRIFT

(11) **EP 0 538 584 B1**
(45) Veröffentlichungstag und Bekanntmachung des Hinweises auf die Patenterteilung: **26.03.1997**
(21) Anmeldenummer: 92114213.9
(22) Anmeldetag: 20.08.1992
(51) Int. Cl.: G11B 33/04, G11B 23/023

(54) **Aufbewahrungseinrichtung für Aufzeichnungsträger**
Storage device for recording medium
Dispositif de rangement pour support d'enregistrement

(30) Priorität: 25.10.1991 DE 4135324
(43) Veröffentlichungstag der Anmeldung: 28.04.1993
(73) Patentinhaber: fischerwerke Artur Fischer GmbH & Co. KG, D-72178 Waldachtal (DE)
(72) Erfinder: Nehl, Wolfgang, 72178 Tumlingen/Waldachtal (DE)

(56) Entgegenhaltungen:
- WO-A-86/01328
- WO-A-87/00957
- DE-C- 2 560 415
- US-A- 3 969 007
- US-A- 3 995 737
- US-A- 4 265 369
- US-A- 4 330 162

## Beschreibung

Die Erfindung betrifft eine Aufbewahrungseinrichtung für Aufzeichnungsträger gemäß der Gattung des Anspruchs 1.

Es sind Aufbewahrungseinrichtungen für die Aufzeichnungsträger wie Tonbandkassetten, Kompaktdisks oder dgl. bekannt, bei denen ein oder mehrere Schieber in einem einseitig offenen Gehäuse angeordnet sind. Jeder Schieber kann einen dieser Aufzeichnungsträger aufnehmen und ist gegen eine Federkraft in das Gehäuse einschiebbar. Mittels einer Verriegelungseinrichtung wird der Schieber in eingeschobenem Zustand gehalten und kann durch Druck auf eine Entriegelungstaste wieder entriegelt werden. Der entriegelte Schieber wird von der Feder in Richtung Gehäuseöffnung bewegt, so daß der Aufzeichnungsträger an der Frontseite des Gehäuses soweit übersteht, daß er bequem entnommen werden kann.

Bei einer aus der DE-C-25 60 415 bekannten Aufbewahrungseinrichtung greift die Verriegelungseinrichtung in der Aufbewahrungsposition in eine Rastnut oder Kerbe oder dgl. am Aufzeichnungsträger ein und hält diesen zusammen mit dem Schieber in der eingeschobenen Aufbewahrungsposition. Auch in der Entnahmeposition bleibt der Schieber vollständig in der Aufbewahrungseinrichtung und nur der Aufzeichnungsträger ragt heraus, so daß er gegriffen werden kann. Nach Entnahme des Aufzeichnungsträgers ist es deshalb nicht erforderlich, den Schieber zurückzuschieben, damit benachbarte Schieber und deren Verriegelungseinrichtungen zugänglich werden. Sobald auf dem in der Entnahmeposition befindlichen Schieber wieder ein Aufzeichnungsträger abgelegt werden soll, wird dieser auf den Schieber aufgelegt und gegen die Federkraft einer am Schieber angreifenden Feder in die Aufbewahrungseinrichtung eingeschoben, bis die Verriegelungseinrichtung in der Aufbewahrungsposition wirksam wird. Der Schieber muß also nicht vor dem Einlegen eines Aufzeichnungsträgers erst wieder zugänglich gemacht werden. Durch den in das Gehäuse der Aufbewahrungseinrichtung zurückgesetzten Schieber sind in der Frontblende lediglich schmale Öffnungen für die Aufzeichnungsträger erforderlich. Öffnungen für überstehende Schieberteile sind nicht erforderlich, so daß eine geschlossene Frontblende die Öffnungen für die Aufzeichnungsträger umschließen kann.

Die bekannte Aufbewahrungseinrichtung hat allerdings den Nachteil, daß ihre in der Aufbewahrungsposition am Gehäuse des Aufzeichnungsträgers einrastende Verriegelungseinrichtung bei Entnahme des Aufzeichnungsträgers, die durch Herausziehen aus dem Schieber in der Entnahmeposition erfolgt, am Aufzeichnungsträger anliegt und über dessen Oberfläche schleift. Dies verursacht Kratzer beim Einschieben und Herausziehen des Aufzeichnungsträgers aus dem Schieber. Durch Abschleifen des Rastelements der Verriegelungseinrichtung kann dieses mit der Zeit unbrauchbar werden.

Der Erfindung liegt daher die Aufgabe zugrunde, eine Aufbewahrungseinrichtung zu schaffen, bei der das Rastelement der Verriegelungseinrichtung beim Herausziehen und Einschieben des Aufzeichnungsträgers in den in der Entnahmeposition befindlichen Schieber den Aufzeichnungsträger nicht beschädigt und selbst nicht abgenutzt wird.

Die Lösung dieser Aufgabe wird bei einer Aufbewahrungseinrichtung der eingangs genannten Gattung mit den im kennzeichnenden Teil des Anspruchs 1 angegebenen Merkmalen erhalten. Die Verriegelungseinrichtung ist ortsfest an der erfindungsgemäßen Aufbewahrungseinrichtung angeordnet, verschiebt sich also nicht mit dem Schieber. Ein am Schieber angebrachtes Entriegelungselement hält die Verriegelungseinrichtung wenigstens über einen Teil des Schieberwegs geöffnet, den der Schieber von der Entnahmeposition zur Aufbewahrungsposition zurücklegt. Durch diese Maßnahme wird eine Berührung während des Verschiebevorgangs zwischen dem Rastelement der Verriegelungseinrichtung und dem Aufzeichnungsträger - beispielsweise einer Minidisk - bzw. dessen Gehäuse vermieden. Das Rastelement der Verriegelungseinrichtung verursacht beim Einschieben und Herausziehen des Aufzeichnungsträgers aus dem Schieber keine Kratzspuren an dessen Gehäuse und wird selbst nicht abgeschliffen, so daß sich das Rastelement nicht abnutzt und dadurch auf Dauer brauchbar bleibt.

Besonders vorteilhaft ist es, an jedem Schieber wenigstens eine Haltefeder vorzusehen, die einen auf den Schieber aufgelegten Aufzeichnungsträger gegen unbeabsichtigtes Herausrutschen sichert. Die Haltefeder kann zu diesem Zweck federnd in eine Vertiefung am Gehäuse des Aufzeichnungsträgers eingreifen. Damit ist auch eine waagerechte Anordnung der Aufbewahrungseinrichtung problemlos möglich. Beim Verschieben des Schiebers in die Entnahmeposition wird durch die Haltefeder ebenfalls vermieden, daß der aufliegende Aufzeichnungsträger aus der Aufbewahrungseinrichtung herauskatapultiert wird.

Um die Verriegelungseinrichtung während der Schieberbewegung geöffnet zu halten, kann am Schieber eine in Richtung Verriegelungseinrichtung abstehende Lasche angeordnet sein, die über eine Federzunge gleitet, an derem freien Ende sich das Rastelement der Verriegelungseinrichtung befindet. Solange die Lasche sich über der Federzunge befindet, wird das Rastelement nach unten gedrückt, so daß eine Berührung mit dem Aufzeichnungsträger sicher vermieden wird.

An dem Rastelement kann zusätzlich ein Federdraht seitlich angreifen, der mittels einer an der Entriegelungstaste ausgebildeten Schrägfläche nach unten gedrückt werden kann, so daß das Rastelement dadurch ebenfalls in die Entriegelungsposition ausgelenkt wird.

Die Erfindung wird nachfolgend anhand eines in der Zeichnung dargestellten Ausführungsbeispiels näher erläutert.

Es zeigen:
- Figur 1: eine Aufbewahrungseinrichtung für Minidisks,
- Figur 2: den Längsschnitt der in Figur 1 dargestellten Aufbewahrungseinrichtung,
- Figur 3 und Figur 4: die Verriegelungseinrichtung der Aufbewahrungseinrichtung von unten in Ruhestellung (Figur 3) und bei gedrückter Entriegelungstaste (Figur 4),
- Figur 5: die prinzipielle Anordnung eines in der Aufbewahrungseinrichtung enthaltenen Schiebers und der Verriegelungseinrichtung in Draufsicht und
- Figur 6: eine Darstellung des Funktionsprinzips der Verriegelungseinrichtung.

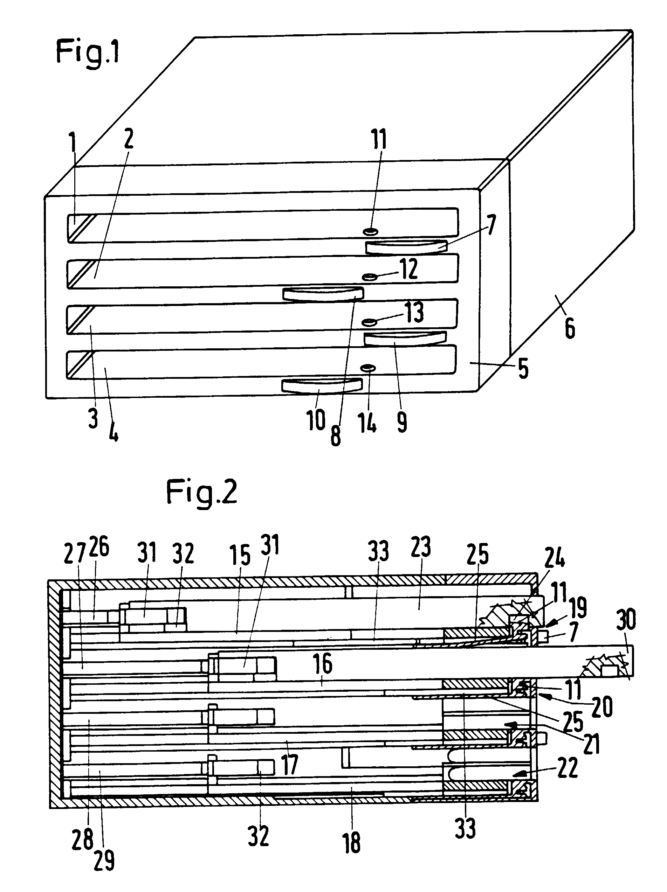

Die in Figur 1 dargestellte Aufbewahrungseinrichtung besitzt vier Einschuböffnungen 1 - 4, in die jeweils eine sogenannte Minidisk einschiebbar ist. Eine Frontblende 5 schließt das Gehäuse 6 der Aufbewahrungseinrichtung an der Frontseite ab. Versetzt angeordnete Entriegelungstasten 7 - 10 dienen zur Betätigung von Rastelementen 11 - 14, die sich jedoch hier bereits in der entriegelten Stellung befinden. Bei nicht eingeschobenem Aufzeichnungsträger (Minidisk) befindet sich der hier nicht sichtbare Schieber in der Aufbewahrungseinrichtung in einer Entnahmeposition und drückt die Rastelemente 11 - 14 nach unten. Ein Aufzeichnungsträger kann jetzt beispielsweise in die Einschuböffnung 1 eingeschoben werden, ohne daß das Rastelement 11 unten mit dem Aufzeichnungsträger in Berührung kommt.

Anhand von Figur 2 ist insbesondere ersichtlich, wie die Schieber 15 - 18 mit den jeweils zugehörigen Verriegelungseinrichtungen 19 - 22 zusammenwirken.

Auf dem Schieber 15, der sich in der Aufbewahrungsposition befindet, liegt als Aufzeichnungsträger eine Minidisk 23 auf. Das Rastelement 11 befindet sich in der Rastposition und greift in eine Aussparung 24 an der Minidisk 23 ein. Das Rastelement 11 befindet sich am freien Ende einer Federzunge 25 und kann durch Druck auf die Entriegelungstaste 7 nach unten bewegt werden.

Wird die Entriegelungstaste 7 betätigt, so drückt eine Feder 26 den Schieber 15 in eine Entnahmeposition, wie sie der Schieber 16 einnimmt. In dieser Entnahmeposition ragt die auf dem Schieber 16 aufliegende Minidisk 30 deutlich an der Frontblende 5 heraus und kann bequem entnommen werden. Eine Haltefeder 31 sorgt dafür, daß die Minidisk 30 nicht aus der Aufbewahrungseinrichtung herauskatapultiert wird. Die Haltefeder 31 greift zu diesem Zweck in Vertiefungen 32 an der Minidisk 30 ein.

An den Schiebern 15 - 18 sind in Richtung Verriegelungseinrichtung 19 - 22 weisende Laschen 33 angebracht. Die Lasche 33 des Schiebers 16 drückt in der Entnahmeposition die Federzunge 25 nach unten, so daß das Rastelement 11 der Verriegelungseinrichtung 20 die Minidisk 30 an der Unterseite nicht berührt.

Da die Federzunge 25 in der Rastposition schräg nach oben verläuft, wie dies bei der Verriegelungseinrichtung 19 dargestellt ist, bewirkt ein Verschieben des Schiebers 15 in Richtung Entnahmeposition bereits nach einer kurzen Wegstrecke ein Niederdrücken der Federzunge 25 und damit ein Niederhalten des Rastelements 11 in der Position, wie dies bei den Verriegelungseinrichtungen 20 - 22 dargestellt ist.

Beim Einlegen einer Minidisk in die Aufbewahrungseinrichtung wird der zugehörige Schieber gegen die Federkraft der Feder 26 - 29 in die Aufbewahrungsposition (Rastposition) zurückgeschoben, wobei dann das zugehörige Rastelement 11 in die Aussparung 24 der Minidisk einrastet.

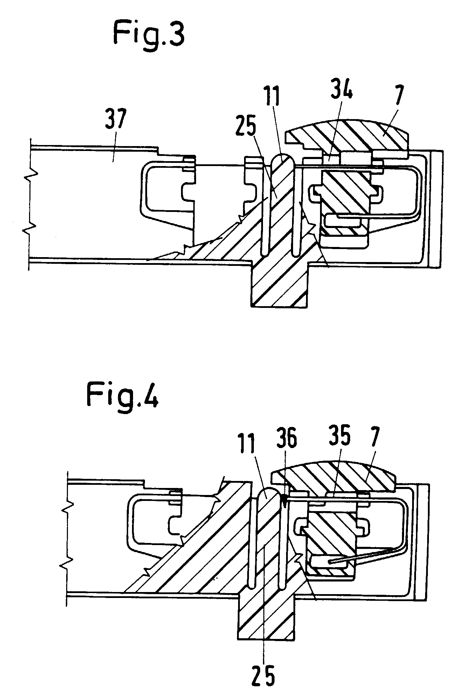

In den Figuren 3 und 4 ist die Verriegelungseinrichtung 19 von unten vergrößert dargestellt. Die Verriegelungstaste 7 befindet sich in Figur 3 in Ruhestellung, während in Figur 4 die Verriegelungstaste 7 niedergedrückt ist. An der Verriegelungstaste ist eine Schrägfläche 34 ausgebildet, die in der Position gemäß Figur 4 einen Federdraht 35 aus der Bildebene heraus auslenkt. Dabei wird gleichzeitig das am Ende 36 des Federdrahts 35 befestigte Rastelement 11 aus der Bildebene heraus bewegt. Das Rastelement 11 befindet sich dann in der Entriegelungsposition.

Die Grundplatte 37, in der die Verriegelungseinrichtung angeordnet ist, ist so ausgebildet, daß die Entriegelungstaste 7 rechts oder links vom Rastelement 11 angeordnet werden kann.

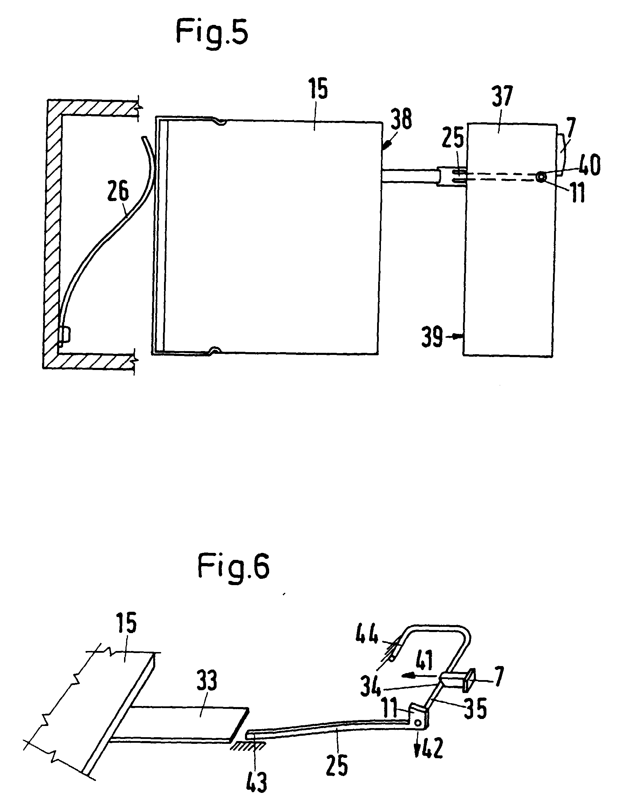

In Figur 5 ist die vereinfachte Draufsicht im Bereich des Schiebers 15 angegeben. Die Feder 26 liegt rückseitig am Schieber 15 an und drückt diesen aus der dargestellten Rastposition in eine Entnahmeposition, die erreicht ist, sobald der Schieber 15 mit seiner Vorderkante 38 an der rückwärtigen Seite 39 des Grundkörpers 37 anliegt. Die Lasche 33 gleitet dabei über die Federzunge 25 und drückt diese zusammen mit dem daran angebrachten Rastelement 11 nieder. In der Rastposition ragt das Rastelement 11 aus einer in der Grundplatte 37 vorgesehenen Öffnung 40 heraus.

In Figur 6 ist das Prinzip der Verriegelungseinrichtung 19 in stark vereinfachter Darstellung angegeben. Aus dieser Darstellung ist insbesondere die Schrägfläche 34 und deren Funktion ersichtlich. Wird die Taste 7 in Pfeilrichtung 41 bewegt, so bewirkt die Schrägfläche 34, daß der Federdraht 35 nach unten ausgelenkt wird. Das Rastelement 11 wird dadurch gleichermaßen in Pfeilrichtung 42 nach unten ausgelenkt.

Die Federzunge 25 ist an ihrem Ende 43 fixiert, während der Federdraht 35 an seinem Ende 44 in der Aufbewahrungseinrichtung fixiert ist.

## Patentansprüche

1. Aufbewahrungseinrichtung für Aufzeichnungsträger (23,30) wie Kompaktdisks, Magnetbandkassetten oder dgl. mit einem gegen eine Federkraft in eine Aufbewahrungsposition verschiebbaren Schieber (15-18), der mittels einer am Gehäuse des Aufzeichnungsträgers (23,30) einrastenden Verriegelungseinrichtung (11-14) in der Aufbewahrungsposition gehalten wird und mittels einer Entriegelungstaste (7-10) entriegelbar ist, um den Schieber (15-18) mittels Federkraft in eine Entnahmeposition zu bringen, in der sich der gesamte Schieber (15-18) zurückgesetzt in der Aufbewahrungseinrichtung befindet, wobei ein auf dem Schieber (15-18) aufgelegter Aufzeichnungsträger (23,30) in der Entnahmeposition an der Frontseite der Aufbewahrungseinrichtung greifbar herausragt, **dadurch gekennzeichnet**, daß am Schieber (15 - 18) ein Entriegelungselement (33) angebracht ist, das die Verriegelungseinrichtung (19 - 22) wenigstens über einen Teil des Schieberweges geöffnet hält, den der Schieber (15 - 18) von der Entnahmeposition zur Aufbewahrungsposition zurücklegt.

2. Aufbewahrungseinrichtung nach Anspruch 1, **dadurch gekennzeichnet**, daß am Schieber (15 - 18) eine Haltefeder (31) angebracht ist, die den auf dem Schieber (15 - 18) aufgeschobenen Aufzeichnungsträger (23, 30) gegen unbeabsichtiges Herausrutschen aus der Aufbewahrungseinrichtung sichert.

3. Aufbewahrungseinrichtung nach Anspruch 1, **dadurch gekennzeichnet**, daß am Schieber (15 - 18) als Entriegelungselement eine in Bewegungsrichtung nach vorne weisende Lasche (33) absteht, die eine gleichermaßen ausgerichtete Federzunge (25) während der Schieberbewegung nach Verlassen der Aufbewahrungsposition niederdrückt, so daß ein am freien Ende der Federzunge (25) befindliches Rastelement (11 - 14) im Abstand unter dem Aufzeichnungsträger (30) gehalten wird.

4. Aufbewahrungseinrichtung nach Anspruch 3, **dadurch gekennzeichnet**, daß an dem Rastelement (11 - 14) ein Federdraht (35) angreift, der im Abstand vom Rastelement (11 - 14) in der Aufbewahrungseinrichtung befestigt ist, und daß mittels einer Entriegelungstaste (7 - 10) eine Schrägfläche (34) seitlich gegen den Federdraht (35) verschiebbar ist, die bei Betätigung der Entriegelungstaste (7 - 10) den Federdraht (35) und damit auch das Rastelement (11 - 14) in die Entriegelungsposition niederdrückt.

## Claims

1. A storage device for recording media (23, 30) such as compact discs, magnetic tape cassettes or similar such recording media with a slider member (15-18) displaceable against a spring force into a storage position, which slider member is held in the storage position by means of a locking device (11-14) locking into the casing of the recording medium (23, 30) and is releasable by means of a release button (7-10) in order to bring the slider member (15-18) by means of spring force into a removal position in which the entire slider member (15-18) has been returned into the storage device, wherein a recording medium (23, 30) positioned on the slider member (15-18) projects at the front side of the storage device in the removal position so that it can be gripped, characterized in that on the slider member (15-18) there is arranged a releasing element (33) which holds the locking device (19-22) open at least for a part of the path covered by the slider member (15-18) from the removal position to the storage position.

2. A storage device according to claim 1,
characterized in that on the slider member (15-18) there is arranged a retaining spring (31) which safeguards the recording medium (23, 30) pushed onto the slider member (15-18) against slipping accidentally from the storage device.

3. A storage device according to claim 1,
characterized in that a lug (33), forming the releasing element, projects from the slider member (15-18) forwards in the direction of movement, which lug presses a similarly aligned resilient tongue (25) downwards during the slider member movement after leaving the storage position so that a latching element (11-14) located at the free end of the resilient tongue (25) is held below the recording medium (30) at a distance therefrom.

4. A storage device according to claim 3,
characterized in that a spring wire (35) which is fixed at a distance from the latching element (11-14) in the storage device acts on the latching element (11-14), and by means of a release button (7-10) a sloping face (34) is displaceable laterally against the spring wire (35) and on operation of the release button (7-10) presses down the spring wire (35), and thus also the latching element (11-14), into the release position.

## Revendications

1. Dispositif de rangement pour des supports d'enregistrement (23 - 30) comme des disques compacts, des cassettes de bande magnétique ou analogues, comportant un tiroir (15 - 18) qui peut coulisser, à l'encontre d'une force élastique, dans une position de rangement, qui est maintenu dans la position de rangement au moyen d'un dispositif de verrouillage (11 - 14) se crantant dans la pochette du support d'enregistrement (23,30) et qui peut se déverrouiller au moyen d'une touche de déverrouillage (7 - 10) pour, sous l'action de la force élastique, amener le tiroir (15 - 18) dans une position de prélèvement dans laquelle l'ensemble du tiroir (15 - 18) se trouve rappelé dans le dispositif de rangement, un support d'enregistrement (23, 30), posé sur le tiroir (15 - 18) pouvant alors, dans la position de prélèvement, dépasser de la façade du dispositif de rangement pour y être saisi, **caractérisé par le fait**, que sur le tiroir (15 - 18) est rapporté un élément de déverrouillage (33) qui maintient ouvert le dispositif de verrouillage (19 - 22) au moins sur une partie de la course du tiroir que parcourt le tiroir (15 - 18) pour passer de la position prélèvement à la position de rangement.

2. Dispositif de rangement selon la revendication 1, **caractérisé par le fait** que sur le tiroir (15 - 18) est rapporté un ressort de maintien (31) qui garantit le support d'enregistrement (23, 30), posé sur le tiroir (15 - 18), à l'égard d'un glissement involontaire hors du dispositif de rangement.

3. Dispositif de rangement selon la revendication 1, **caractérisé par le fait que**, sur le tiroir (15 - 18) saille, en tant qu'élément de déverrouillage, une lame (33) qui est dirigée vers l'avant dans le sens du mouvement et qui, pendant le mouvement du tiroir, après qu'il ait quitté la position de rangement, repousse vers le bas une languette élastique (25) alignée de la même façon, de sorte qu'un élément de crantage (11 - 14) qui se trouve à l'extrémité libre de la languette élastique (25) soit maintenu à une certaine distance en-dessous du support d'enregistrement (30).

4. Dispositif de rangement selon la revendication 3, **caractérisé par le fait,** qu'agit sur l'élément de crantage (11 - 14) un fil d'acier à ressort (35) qui est fixé dans le dispositif de rangement à une certaine distance de l'élément de crantage (11 - 14) et par le fait qu'au moyen d'une touche de déverrouillage (7 - 10) on puisse faire coulisser latéralement, à l'encontre du fil d'acier à ressort (35), une surface oblique (34) qui, lorsque l'on manoeuvre la touche de déverrouillage (7 - 10), repousse vers le bas le fil d'acier à ressort (35), et donc également l'élément de crantage (11 - 14), dans la position de déverrouillage.
